# EUROPEAN PATENT APPLICATION

(11) **EP 1 385 060 A1**
(43) Date of publication of application: **28.01.2004**
(21) Application number: 02718559.4
(22) Date of filing: 12.04.2002
(51) Int. Cl.: G03G 5/10, G03G 21/00

(54) **PRODUCTION METHOD FOR PHOTOSENSITIVE DRUM-USE SUBSTRATE AND PHOTOSENSITIVE DRUM-USE SUBSTRATE**

(30) Priority: 12.04.2001 JP 2001113774
(71) Applicant: BRIDGESTONE CORPORATION, Tokyo 104-0031 (JP)
(72) Inventor: IIZUKA, Munenori, Kodaira-shi, Tokyo 187-0031 (JP); SUZUKI, Takahiro, Kodaira-shi, Tokyo 187-0031 (JP); MACHIDA, Kunio, Suginami-ku, Tokyo 167-0021 (JP)
(74) Representative: Whalley, Kevin
(86) International application number: PCT/JP2002/003661
(87) International publication number: WO 2002/084407

(57) **Abstract**

The substrate for photosensitive drum of the invention for use in electrophotographic process is produced by ultrasonic-welding a resin-made flange or gear flange to an end portion of a cylindrical substrate made from an electroconductive resin composition prepared by dispersedly mixing an electroconductive material and a filler into a polymer matrix. The ultrasonic welding permits an efficient production of the substrate for photosensitive drum and ensures a high rotation accuracy of the substrate for photosensitive drum. With such a substrate for photosensitive drum, images with high quality can be formed.

## Description

### Technical Field

The present invention relates to an efficient production method of resin-made cylindrical substrates for photosensitive drums which are used in electrophotographic apparatuses and electrostatic recording apparatuses, and relates to substrates for photosensitive drums produced by the method.

### Background Art

The electrostatic recording process utilized in copying machines, facsimile machines, printers, etc. includes the steps of uniformly charging the surface of a photosensitive drum; forming electrostatic latent images by imagewise irradiation the charged surface of the photosensitive drum with a light from an optical system to dissipate the charges of the light-exposed area; forming toner images by the electrostatic adhesion of toners to the electrostatic latent images; and transferring the toner images to a recording medium such as paper, overhead projector sheet and photographic paper to produce printed images.

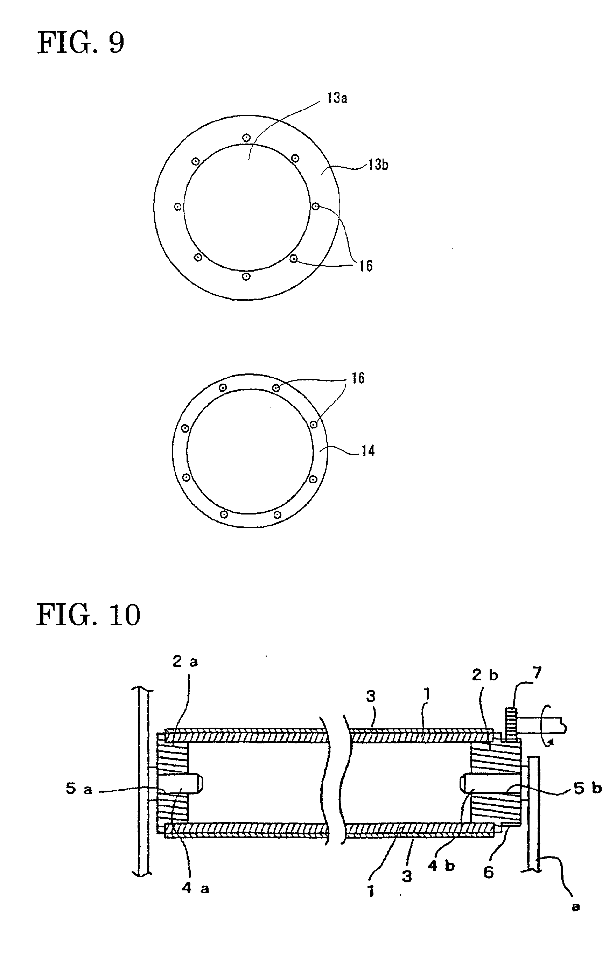

Generally, a photosensitive drum having a structure as shown in Fig. 10 has been conventionally used in such electrostatic recording processes, in which a cylindrical substrate 1 with a good electrical conductivity has flanges 2a, 2b that are fixedly disposed by fitting at its both ends and has a photosensitive layer 3 formed on its outer peripheral surface. As shown in Fig. 10, the photosensitive drum is rotatably supported by inserting supporting shafts 4a, 4b disposed on the body a of an electrophotographic apparatus into bearing holes 5a, 5b formed through the flanges 2a, 2b, and driven for rotation by a drive gear 6 formed on the flange 2b that mates with a gear 7 connected to a driving device such as motors.

The cylindrical substrate 1 of such a photosensitive drum has been conventionally made of aluminum alloy because of its light weight, excellent machinability and good electrical conductivity. Resin-made gear flanges 2a; 2b are adhesively fitted into both ends of the cylindrical substrate 1 made of aluminum alloy to provide a substrate for photosensitive drum.

The above method of producing the substrate for photosensitive drum, however, requires the steps of applying an adhesive and drying it thereby to result in a poor productivity. Also, at present, a substrate for photosensitive drum with a sufficient rotation accuracy is not produced by the method.

### Disclosure of Invention

In view of the above circumstances, the present invention is intended to solve the problems of the prior art and to achieve the following objects.

Thus, an object of the present invention is to provide a method for efficiently producing a resin-made, integral substrate for photosensitive drum with a high rotation accuracy, and another object is to provide a resin-made, integral substrate for photosensitive drum.

As a result of extensive study in view of achieving the above objects, the inventors have found that the resin-made, integral substrate for photosensitive drum with a high rotation accuracy is efficiently produced by ultrasonic-welding a resin-made gear flange or flange to each end of a cylindrical substrate. The present invention has been accomplished on the basis of this finding.

Thus, the present invention relates to a method for producing a cylindrical substrate that constitutes a substrate of a photosensitive drum for use in electrophotographic process, the method comprising a step of ultrasonic-welding a resin-made gear flange or flange to each end of a cylindrical substrate that is made of an electroconductive resin composition prepared by dispersively mixing an electroconductive material and a filler with a polymer matrix.

A flange may be integrally formed at one end of the cylindrical substrate, and a resin-made gear flange or flange may be fitted to the other end by ultrasonic welding.

A projection or ridge to butt against the resin-made flange or flange may be formed on a bonding surface of the cylindrical substrate. Alternatively, the projection or ridge to butt against the cylindrical substrate may be formed on a bonding surface of the resin-made flange or flange. Further, the projection or ridge may be formed on both bonding surfaces at the same time. Since ultrasonic vibrations are concentrated on the projection or ridge, the kinetic energy is efficiently transformed into thermal energy. As a result, the projection or ridge is melted to firmly bond the cylindrical substrate and the flange by welding. The method of the present invention produces very little flash. Additionally, the method is odorless, non-toxic and needless to use a drying step because the use of adhesives is not required, this enabling the welding within a very short period of time to significantly enhance the productivity.

The present invention further relates to a substrate for photosensitive drum produced by the above method. Since the whole body is integrally formed from a rein material, the substrate for photosensitive drum has excellent recyclability, high rotation accuracy and high quality.

### Brief Description of Drawings

Fig. 1 illustrates the method of producing a substrate for photosensitive drum by ultrasonic welding;
Fig. 2 is a cross-sectional view showing one example of the formation of projection or ridge employed in the present invention;
Fig. 3 is a side view showing another example of the formation of projection or ridge employed in the present invention;
Fig. 4 is a cross-sectional view showing still another example of the formation of projection or ridge employed in the present invention;
Fig. 5 is a cross-sectional view showing still another example of the formation of projection or ridge employed in the present invention;
Fig. 6 is a plan view of Fig. 5;
Fig. 7 is a cross-sectional view showing still another example of the formation of projection or ridge employed in the present invention;
Fig. 8 is a cross-sectional view showing still another example of the formation of projection or ridge employed in the present invention;
Fig. 9 is a plan view of Fig. 8; and
Fig. 10 is a cross-sectional view showing a general construction of a conventional photosensitive drum.

### Best Mode for Carrying Out the Invention

Referring to the attached drawings, the present invention will be described in more detail.

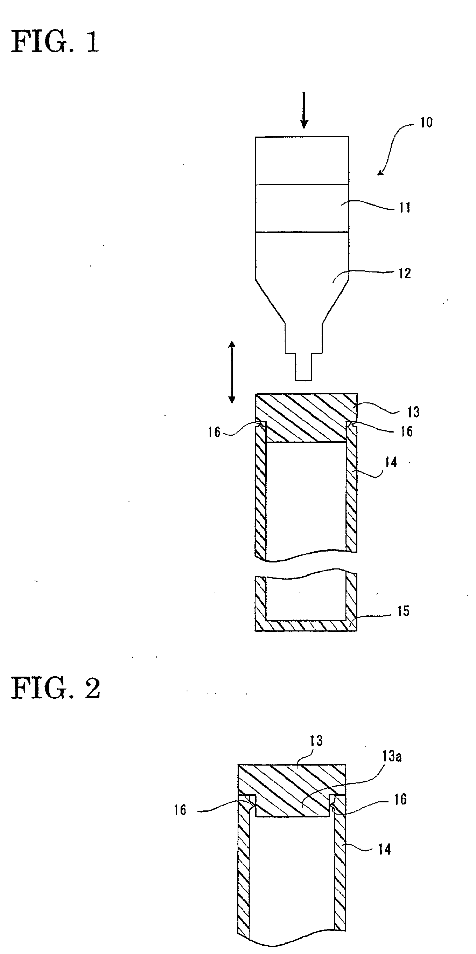

As exemplified in Fig. 1, in the production method of the present invention, a resin-made gear flange 13 is welded by using an ultrasonic welding machine 10 to one end of a resin-made cylindrical substrate 14 molded from an electroconductive resin composition comprising a polymer matrix dispersedly mixed with an electroconductive material and a filler (hereinafter referred to merely as "electroconductive resin composition"), thereby producing the substrate for photosensitive drum. In Fig. 1, reference numerals 11 and 12 respectively show a vibrator and a horn, and a flange 15 is integrally formed at the other end of the cylindrical substrate 14.

The present invention includes (1) a production method in which a resin-made gear flange or flange is fitted by ultrasonic welding to each end of the cylindrical substrate molded from the electroconductive resin composition, and (2) a production method in which a resin-made gear flange or flange is fitted by ultrasonic welding to one end of the cylindrical substrate having a flange integrally formed at the other end, which is molded from the electroconductive resin composition. The production method (2) is more preferred because the welding is accomplished in a single ultrasonic welding operation to reduce the number of steps.

A gear flange having a gear portion and a flange with no gear portion may be used, with the gear flange being preferred in view of strength and weldability upon ultrasonic welding.

The method of ultrasonic welding is not strictly limited and performed by using a usual ultrasonic welding machine that can be suitably selected according to purposes. The conditions such as amplitude and frequency of ultrasonic wave, the pressing force (force for pressing the horn against the molded body) and the welding time cannot be specifically determined because vary depending on the type of resin being welded, the size of the molded body and other factors. Generally, the ultrasonic welding is performed using ultrasonic wave of about 20 to 80 µm amplitude and about 1 to 30 kHz frequency under a pressing force of 0.1 to 0.5 MPa for a welding time of 0.2 to 1 s. Such conditions can be attained by an ultrasonic vibrating machine such as an ultrasonic welder "SONOPET Σ-900" manufactured by Seidensha Electronics Co., Ltd.

To ensure an efficient ultrasonic welding by concentrating the vibration to the bonding surface, a projection or ridge are preferably formed on the bonding surface of cylindrical substrate and/or the bonding surface of gear flange (flange).

As shown in Fig. 2, for example, a projection or ridge 16 is preferably formed on the inner peripheral surface at the end portion of a cylindrical substrate 14 so as to butt-contact, upon fitting, the outer peripheral surface of a gear portion 13a of a gear flange 13.

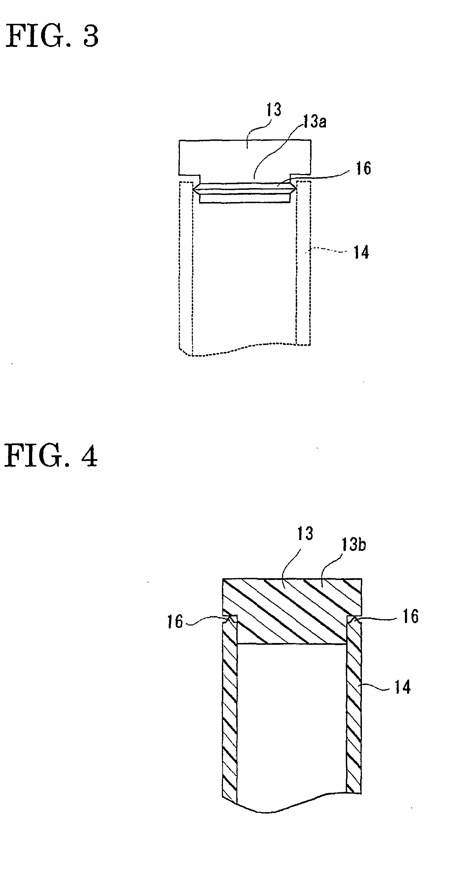

Alternatively, as shown in Fig. 3, a ridge 16 is preferably formed on the outer peripheral surface of a gear portion 13a of a gear flange 13 so as to butt-contact, upon fitting, the inner peripheral surface of a cylindrical substrate 14. A projection may be formed in place of the ridge on the gear portion 13a of the gear flange 13.

Also, as shown in Figs. 1 and 4, a projection or ridge 16 is preferably formed on the end surface of a cylindrical substrate 14 so as to butt-contact a flange portion 13b of a gear flange 13. A flange having no gear portion may be used in place of the gear flange.

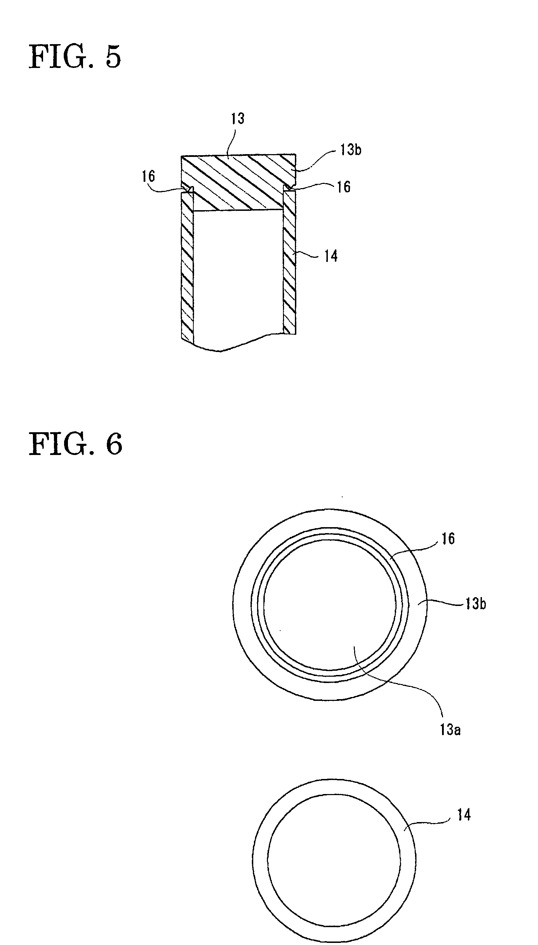

Also, as shown in Figs. 5 and 6, a ridge 16 is preferably formed on a flange portion 13b of a gear flange 13 so as to butt-contact a cylindrical substrate 14. A projection may be formed in place of the ridge on the flange portion 13b of the gear flange, and a flange having no gear portion may be used in place of the gear flange.

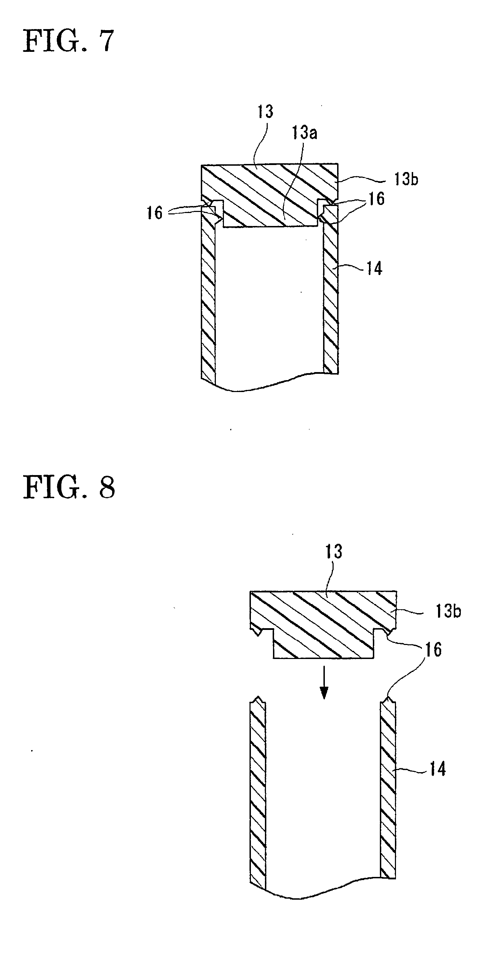

The projections and ridges illustrated in Figs. 2 and 5 may be combinedly used. Namely, as shown in Fig. 7, a projection or ridge 16 is formed on a flange portion 13b of a gear flange 13 so as to butt-contact a cylindrical substrate 14, and simultaneously, another projection or ridge 16 is formed on the inner peripheral surface at the end portion of the cylindrical substrate 14 so as to butt-contact, upon fitting, the outer peripheral surface of a gear portion 13a of the flange. Although not shown in the drawings, the projections or ridges of Figs. 2 and 4, Figs. 3 and 5 or Figs. 3 and 4 may be also combinedly used.

In addition, as shown in Figs. 8 and 9, projections 16 may be formed on both the end surface of a cylindrical substrate 14 and the surface of flange portion 13b of a gear flange 13 which comes to butt-contact with the cylindrical substrate 14 in staggered configuration with appropriate intervals.

The positions of the projections and ridges on the bonding surfaces of the cylindrical substrate and/or the gear flange (flange) are not limited to those illustrated above and may be suitably changed.

The shape and size of the projections and ridges to be formed on the bonding surfaces of the cylindrical substrate and/or the gear flange (flange) are not specifically limited and may be suitably selected as far as ultrasonic vibrations are concentrated thereto to enable the ultrasonic welding.

As described above, the substrate for photosensitive drum of the present invention is produced by ultrasonic-welding the resin-made gear flange to one end of the resin-made cylindrical substrate by using an ultrasonic welding machine. In such a production method, usable as the material for the cylindrical substrate includes an electroconductive resin composition prepared by blending an electroconductive material and a filler into a polymer matrix which is usually used for substrates for photosensitive drum.

Thermoplastic resins, but not limited to, are preferably used as the polymer matrix of the electroconductive resin composition. Although known resin materials conventionally used for photosensitive drum substrate may be used as the thermoplastic resins, polyamide resins and/or polyester resins are preferably used because of their ability to form a smooth surface sufficient for forming a photosensitive layer thereon and their good chemical resistance and mechanical strength. Examples of the polyamide resins include nylon 11, nylon 12, nylon 46, nylon 6, nylon 66, nylon MXD6, nylon 610, nylon 612, nylon 1212, and copolymers of the preceding nylons. Examples of the polyester resins include poly(ethylene terephthalate), poly(ethylene naphthalate) and poly(butylene terephthalate). The above resins may be used alone or in combination of two or more.

To prevent the dimensional change due to water absorption, a resin having a water absorption of 0.3% or less (hereinafter may be referred to as "low water absorption") when measured according to ASTM-D570 may be added to the polyamide resin (PA). The low water absorption resins are exemplified by polypropylene (PP), poly(phenylene ether) (PPE) and poly(phenylene sulfide) (PPS), and suitably selected by considering the compatibility with the polyamide resins.

Using a polymer alloy prepared by blending the resin having a water absorption of 0.3% or less (hereinafter may be referred to as "blend resin") into the polymer matrix, the water absorption can be lowered even when using a resin having a high water absorption such as usual polyamide resins thereby to reduce the dimensional change even in high-temperature and high-humidity environments.

An alloy resin blend of the polymer matrix and the resin having a water absorption of 0.3% or less is prepared, for example, by blending the resin having a water absorption of 0.3% or less in an amount preferably 1 to 70% by mass, more preferably 5 to 50% by mass, still more preferably 10 to 40% by mass base on the polymer matrix.

The above blending may be suitably performed in the presence of a compatibilizer having a high affinity for both the polyamide resin and the blend resin to enhance the dispersibility by improving the compatibility between the resin components, thereby improving the mechanical properties such as strength as well as the water absorption and the chemical resistance. Examples of the compatibilizers include a maleic acid-modified polypropylene (maleic acid-modified PP) for PA-PP blend, and an epoxy-modified polystyrene (epoxy-modified PS)-poly(methyl methacrylate) (PMMA) copolymer for PA-PPS blend and PA-PPE blend.

The molded article made of the alloy resin blend of the polyamide resin and the resin having a water absorption of 0.3% or less shows, as described above, a dimensional stability superior to molded articles comprising only another polyamide resin as the resin component. The results of reference examples to compare the dimensional stability are shown in the following table. In Table 1, the water absorption and the dimensional change were expressed by the difference between before and after allowing samples to stand in a high-temperature, high-humidity chamber under 50°C-95% RH environment for 24 h. It can be seen that the water absorption and the dimensional change of molded articles under high-temperature, high-humidity environments are drastically improved by blending the low water absorption resin into the polyamide resin.

**Table 1**

| | Reference Examples | | | | | |
|---|---|---|---|---|---|---|
| | 1 | 2 | 3 | 4 | 5 | 6 |
| Polymer matrix (% by mass) | | | | | | |
| PA66 | 70 | 70 | 70 | 42 | 42 | 42 |
| Blend resin (% by mass) | | | | | | |
| PPE | - | - | - | 28 | - | - |
| PPS | - | - | - | - | 28 | - |
| PP | - | - | - | - | - | 28 |
| Electroconductive material (% by mass) Ketjenblack | 10 | 10 | 10 | 10 | 10 | 10 |
| Reinforcing agent (% by mass) potassium titanate whisker | 10 | 20 | 30 | 20 | 20 | 20 |
| Water absorption (%)*¹ | 1.6 | 1.5 | 1.3 | 0.4 | 0.2 | 0.3 |
| Dimensional change (%)*² | 1.12 | 1.05 | 0.95 | 0.3 | 0.2 | 0.4 |

| | | | | | | |
|---|---|---|---|---|---|---|
| *¹Measured according to ASTM D-570 | | | | | | |
| *²Dimesional change along flowing direction | | | | | | |
| PA66: Nylon 66, "UBE Nylon" manufactured by Ube Industries, Ltd. | | | | | | |
| PPE: Modified poly(phenylene ether), "Xyron" manufactured by Asahi Kasei Corporation | | | | | | |
| PPS: "Susteel" manufactured by Tosho Corporation | | | | | | |
| PP: "Mitsubishi Polypro" manufactured by Mitsubishi Chemical Corporation Ketjenblack: Carbon black manufactured by Lion Corporation Potassium titanate whisker: "Tismo" manufactured by Otsuka Chemical Co., Ltd. | | | | | | |

The electroconductive composition acquires its electroconductivity by the blend of the electroconductive material into the polymer matrix. The electroconductive materials are not limited as far as uniformly dispersible throughout the polymer matrix, and examples thereof include carbon black, graphite, powders of metals such as aluminum, copper and nickel, and electroconductive glass powders, with carbon black being particularly preferred. The blending amount of the electroconductive material is, not specifically limited to, preferably 5 to 30% by mass, more preferably 5 to 20% by mass based on the electroconductive resin composition.

The surface resistivity of the resin-made substrate for photosensitive drum of the present invention is preferably less than 10⁵ Ω/□ when used in a photosensitive drum of a high-speed image forming apparatus having a printing speed of about 20-40 papers/min. A surface resistivity of 10⁵ Ω/□ or higher is likely to cause the lowering of the surface potential characteristic (potential attenuation characteristics upon exposure to light) and the occurrence of image defects such as black point and fogging. The surface resistivity is more preferably less than 10⁴ Ω/□, still more preferably less than 10² Ω/□, and most preferably 5 × 10¹ Ω/□ or less. The lower limit of the surface resistivity is not particularly limited, and preferably-1 × 10⁰ Ω/□ or more in view of other properties of the rein-made substrate. The most preferred range of the surface resistivity is from 1 × 10⁰ to 5 × 10¹ Ω/□. The measuring method of the surface resistivity will be described below. By regulating the surface resistivity within the above range, the molding and processing of the substrate for photosensitive drum are facilitated and the potential attenuation characteristics upon exposure to light are improved, thereby preventing the occurrence of image defects.

To reduce the weight of the substrate for photosensitive drum of the present invention while maintaining its dimensional accuracy (inner and outer diameters, run-out, roundness, straightness, etc.), it is effective to adjust the water absorption of the electroconductive resin composition to 1.5% or less. The water absorption referred to herein is measured according to ASTM D-570.

If the water absorption of the electroconductive resin composition exceeds 1.5%, the dimensional accuracy (inner and outer diameters, run-out, roundness, straightness, etc.) cannot be maintained in some cases, for example, when used under high-temperature, high-humidity conditions. The water absorption of the electroconductive resin composition is more preferably 0.7% or less, and still more preferably 0.5% or less.

The outer diameter change (after left stand ― before left stand) of the substrate for photosensitive drum of the present invention at its both ends is preferably 0.1 mm or less, more preferably 0.05 mm or less when left stand under conditions of 50°C and 90% RH for 24 h.

To obtain a high quality substrate for photosensitive drum having a sufficiently high strength comparable with that of a metal-made drum substrate and a resistance to fracture due to shock during transportation or shock of drop, it is effective to form the substrate for photosensitive drum from an electroconductive resin composition having an Izod impact strength of 20 J/m or more.

The electroconductive resin composition may contain various types of fibers to reinforce and bulk the composition. Usable are inorganic fillers, for example, electroconductive fibers or whiskers such as carbon fibers, electroconductive whiskers and electroconductive glass fibers; and non-electroconductive fibers such as glass fibers. Since the electroconductive fiber acts also as an electroconductive material, the use of the electroconductive fiber reduces the blending amount of carbon black.

The blending amount of the filler is suitably selected depending on the type of filler, fiber length, fiber diameter, etc. without any specific limitation, and is preferably 1 to 50% by mass, more preferably 5 to 35% by mass, and still more preferably 10 to 25% by mass based on the electroconductive resin composition. The above mass percentage can be adjusted by blending or not blending the filler or controlling the type of filler and the blending ratio.

In addition to the electroconductive material and the filler, the electroconductive resin composition may be, if desired, added with an effective amount of a known additive such as polytetrafluoroethylene (PTFE), silicone, molybdenum disulfide (MoS₂) and various metal soaps. The electroconductive material and the filler may be surface-treated by a conventional silane coupling agent or titanate coupling agent.

The substrate for photosensitive drum of the present invention is molded into cylindrical shape by employing a suitable molding method depending on the molding material for the photosensitive drum without any specific limitation. To mold the above electroconductive resin composition into the substrate for photosensitive drum of the present invention, injection molding, extrusion and other molding methods may be suitably selected depending on the resin material to be used, with injection molding being particularly preferred. The molding conditions such as molding temperature and injection pressure may be conventionally employed conditions depending on the type of the resin component of the electroconductive resin composition, etc.

The resin material for the flange or the gear flange is not particularly limited as far as it is weldable by ultrasonic wave. Preferably used is a flange or a gear flange molded from the same polymer matrix as in the electroconductive resin composition in view of improving the welding strength.

The photosensitive drum of the present invention has a basic structure similar to that of the conventional photosensitive drum, for example, the basic structure shown in Fig. 10. In place of a shaft 4 composed of two parts 4a, 4b as shown in Fig. 10, a single, continuous shaft 4 may be used. As shown in Fig. 10, the photosensitive drum is produced by forming a photosensitive layer 3 on the outer peripheral surface of a cylindrical substrate 1. The photosensitive layer 3 is formed by applying a coating solution comprising an organic solvent such as alcohol, chloroform and toluene dissolving a photosensitive agent and a binder on the outer peripheral surface of the cylindrical substrate, and by drying the coated solution under heating. The composition of the coating solution for the photosensitive layer may be the same as those conventionally employed. Known layered structures may be applied to the photosensitive layer.

The outer peripheral surface of the resin-made substrate for photosensitive drum of the present invention has a surface roughness of preferably 0.8 µm or less, more preferably 0.2 µm or less in terms of a center line average roughness Ra; preferably 1.6 µm or less, more preferably 0.8 µm or less in terms of a maximum height Rmax; and preferably 1.6 µm or less, more preferably 0.8 µm or less in terms of a ten-point average roughness Rz, although not particularly limited thereto. Excessively large Ra, Rmax and Rz may cause image defects because the roughness on the resin-made substrate surface appears on the photosensitive layer of the photosensitive drum.

The photosensitive drum of the present invention is intended to be installed in the high-speed image forming machine mentioned above, and may have the photosensitive layer and optionally another layer such as a undercoat layer and a protective layer on the resin-made substrate for photosensitive drum. The photosensitive layer preferably comprises at least a charge generating layer and a charge transfer layer. The charge generating layer is generally formed by a charge generating compound and a binder resin. The charge generating compound is suitably selected from, but not limited thereto, the known compounds used in the charge generating layers of conventional photosensitive drums, such as inorganic electroconductive compounds and organic electroconductive compounds, with those having a high ability of charge generation being preferred. The binder resin is suitably selected from known resins conventionally used in the charge generating layers of photosensitive drums, without any specific limitation. The charge generating layer may be formed by a known method such as coating and vapor deposition.

The charge transfer layer preferably comprises a heterogeneous charge transfer layer and a homogeneous charge transfer layer. The heterogeneous charge transfer layer is preferably a particle-dispersed heterogeneous charge transfer layer or a phase-separated heterogeneous charge transfer layer, although not limited thereto. The heterogeneous charge transfer layer may be formed by a known method, for example, by coating a dispersion of a material such as a polymer to be incorporated into the heterogeneous charge transfer layer.

The homogeneous charge transfer layer preferably contains a polymer having a high charge transfer ability and a good film-forming property, although not limited thereto. The homogeneous charge transfer layer may be formed by a known method, for example, by coating a dispersion of a material such as the above polymer to be incorporated into the homogeneous charge transfer layer.

In the present invention, the fractures due to shock during transportation or shock of drop are prevented by forming the substrate for photosensitive drum from the electroconductive resin composition prepared by dispersedly mixing the electroconductive material and the filler into the polymer matrix and by adjusting Izod impact strength of the electroconductive resin composition to 20 J/m or more. The Izod impact strength was measured according to ASTM D-256.

If the Izod impact strength of the electroconductive resin composition is less than 20 J/m, the fractures occur by shock during transportation or shock of drop because of insufficient strength, thereby failing to attain the object of the present invention. The Izod impact strength is preferably 30 J/m or more, more preferably 35 J/m or more, and most preferably 35 to 55 J/m.

In addition, the thermal changes in the outer diameter and the straightness can be made as little as possible by optimizing the flexural modulus of the cylindrical substrate. More specifically, by forming the cylindrical substrate from the electroconductive resin composition so as to have a flexural modulus of 7 × 10³ MPa or more, the changes in the outer diameter and the straightness is avoided even when exposed to heat to some extent, the photosensitive layer is formed without reducing the dimensional accuracy and the reduction in the dimensional accuracy due to injection-molding shrinkage of the cylindrical substrate is effectively prevented, thereby ensuring the production of the substrate for photosensitive drum with a high dimensional accuracy.

The flexural modulus of the cylindrical substrate is more preferably 8 × 10³ MPa or more. A flexural modulus of 7 × 10³ MPa or more minimizes the changes in the outer diameter and the straightness during the heat drying operation for forming the photosensitive layer by a coating method on the outer peripheral surface of the cylindrical substrate, thereby enhancing the dimensional accuracy of the resultant photosensitive drum. If the flexural modulus is excessively low, the outer diameter and the straightness are significantly changed in the heat drying operation for forming the photosensitive layer by a coating method to reduce the dimensional accuracy of the resultant photosensitive drum, resulting in failure of obtaining the photosensitive drum with a good printing ability and attaining the object of the present invention. The higher is the flexural modulus, the reduction in the dimensional accuracy due to heating is more effectively prevented. However, in view of properties of the resin, etc., the flexural modulus is more preferably 7 × 10³ to 20 × 10³ MPa, and most preferably 8 × 10³ to 14 × 10³ MPa.

To minimize the fractures of the cylindrical substrate during the fitting of flange and effectively reduce the fraction defective for obtaining a high-yield production, it is effective to form the cylindrical substrate so as to have a flexural strength of 100 MPa or more. A high flexural strength permits the cylindrical substrate to surely withstand the load of flange insertion. Therefore, the flange is surely inserted into the cylindrical substrate without fractures such as crack to ensure the welding between the flange and the cylindrical substrate, thereby effectively reducing the fraction defective to permit the high-yield production of the substrate for photosensitive drum.

The flexural strength of the resin-made cylindrical substrate is more preferably 200 MPa or more. With such a flexural strength, the fractures of the resin-made cylindrical substrate due to the load at the fitting of flange is effectively prevented to allow the high-yield production. The higher is the flexural strength, the more effectively the fracture at the fitting of flange is prevented. However, an excessively high flexural strength makes the fixing of flange insufficient and makes the photosensitive drum easy to deform, thereby making a stable formation of good images difficult in some cases. Therefore, the flexural strength is usually 100 to 350 MPa, particularly 100 to 250 MPa. The flexural strength is measured by a method prescribed in ASTM D-790.

The flexural strength may be adjusted by changing the formulation of the electroconductive resin composition, for example, by selecting the types of the polymer matrix, the reinforcing filler and the electroconductive material and regulating the mixing ratios thereof.

Although the invention has been described with reference to a specific embodiment, it is to be understood that the scope of the invention is not limited thereto and various changes and modifications may be made without departing from the spirit and scope of the invention.

The invention will be described in more detail by referring to the following examples which should not be construed to limit the scope of the invention thereto.

The properties of the compositions and products were measured by the following methods.

### (1) Surface resistivity

Using each electroconductive resin composition having respective chemical compositions as shown in Table 2, each cylindrical resin-made substrate for photosensitive drum having a diameter of 24 mm, a length of 260 mm and a wall thickness of 1.5 mm was produced. The resistivity was read when showed stable value under applying 90 V (DC) according to JIS K7194 using a 4-prove resistivity meter "Loresta GP" equipped with ASP probe manufactured by Mitsubishi Chemical Corporation.

### (2) Water absorption

Measured according to ASTM D-570.

### (3) Izod impact strength (notched)

Measured according to ASTM D-256 on test pieces that were prepared by injection-molding each electroconductive resin composition having respective formulation as shown in Table 2.

### (4) Flexural modulus

Measured according to ASTM D-790 on test pieces that were prepared by injection-molding each electroconductive resin composition having respective formulation as shown in Table 2.

### (5) Flexural strength

Measured according to ASTM D-790 on test pieces that were prepared by injection-molding each electroconductive resin composition having respective formulation as shown in Table 2.

### (6) Drop test

Each composition shown in Table 2 was injection-molded into cylindrical substrate for photosensitive drum having an outer diameter of 24 mm, a length of 260 mm and a wall thickness of 1.7 mm, which were then allowed to fall onto concrete floor from a height of 1.2 m to determine the ratio of fractured substrates.

### (7) Fraction defective in straightness

Each electroconductive resin composition having respective chemical composition as shown in Table 2 was prepared in conventional manner, and injection-molded into a cylindrical substrate for photosensitive drum having a diameter of 30 mm, a length of 275 mm and a wall thickness of 2 mm. The injection molding operations were carried out in the same mold under the same molding conditions.

Each cylindrical substrate was left at elevated temperature of 120°C for 60 min, cooled, and then examined for the straightness along the whole length of the substrate. As defined in JIS B0021, the straightness is a measure of geometric tolerance determined in the following manner.

The distances between a standard edge with a high linear accuracy and the surface of a cylindrical substrate placed in near parallel to the standard edge were measured by a laser detector and a laser transmitter along the lengthwise direction. The measured values were plotted to obtain a curve and a standard line passing through both ends of the curve was drawn. The maximum difference between the curve and the standard line was taken as the straightness degree. A cylindrical substrate having a straightness degree of 50 µm or more was judged as defective, and the ratio of defective substrates was taken as the fraction defective in straightness.

### (8) Fraction defective in outer diameter change

Cylindrical substrates were prepared in the same manner as in the measurement of the fraction defective in straightness. The outer diameters of both ends (one referred to as side A and the other as side B) were measured before and after the heat treatment (left at elevated temperature of 120°C for 60 min and then allowed to be cooled). Substrates changed its outer diameter by 0.1 mm or more were rated as defective, and the ratio of defective substrates was taken as the fraction defective in outer diameter change.

### (9) Fraction defective in image properties

Each electroconductive resin composition having respective chemical compositions as shown in Table 2 was prepared, which was molded into a cylindrical substrate having a diameter of 24 mm and a length of 260 mm. After fitting a flange to the cylindrical substrate, a photosensitive layer of 30 µm thick was formed thereon to produce a photosensitive drum. The photosensitive drum was mounted in a laser shot printer and the printing was carried out in a print speed of 20 to 40 papers/min. The formed images were visually observed to determine the rate of uneven image occurrence.

### (10) Fraction defective of run-out after fitting flanges

A cylindrical substrate was fixedly cramped at its both ends by cone jigs of a laser scan micrometer (run-out meter) and allowed to rotate at a speed of 120 rpm. The distance between the rotating substrate and the standard edge placed parallel to the jig was measured, and the measured values were averaged in every 246 times measurement per second. The difference between the maximum distance and the minimum distance was taken as the run-out. Substrates having a run-out of 50 µm or more were judged as defective to determine the fraction defective.

### EXAMPLES 1-12

Each electroconductive resin composition having respective chemical composition as shown in Table 2 was prepared in conventional manner. Each resin composition was made into a test piece and a cylindrical substrate which were subjected to the tests (1) to (8). After fitting a flange to each cylindrical substrate, the tests (9) and (10) were conducted. The flange was press-inserted in Example 9, and bonded by ultrasonic welding in Examples 1-8 and 10-12. The ultrasonic welding conditions are given below.

### Ultrasonic Wave

Amplitude: 30 µm
Frequency: 40 kHz
Pressure: 0.3 MPa
Welding Time: 0.5 s

The results are shown in Table 2.

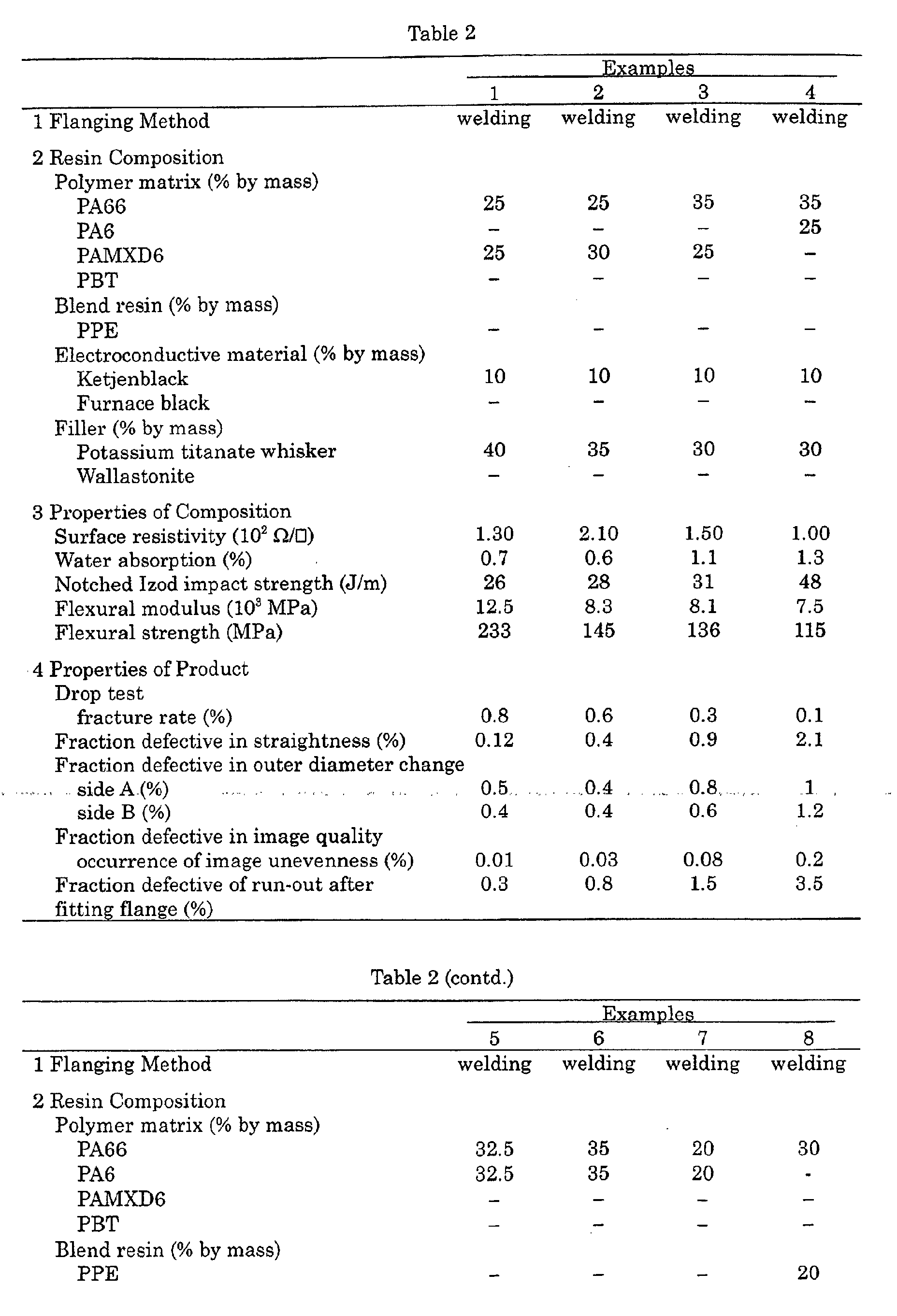

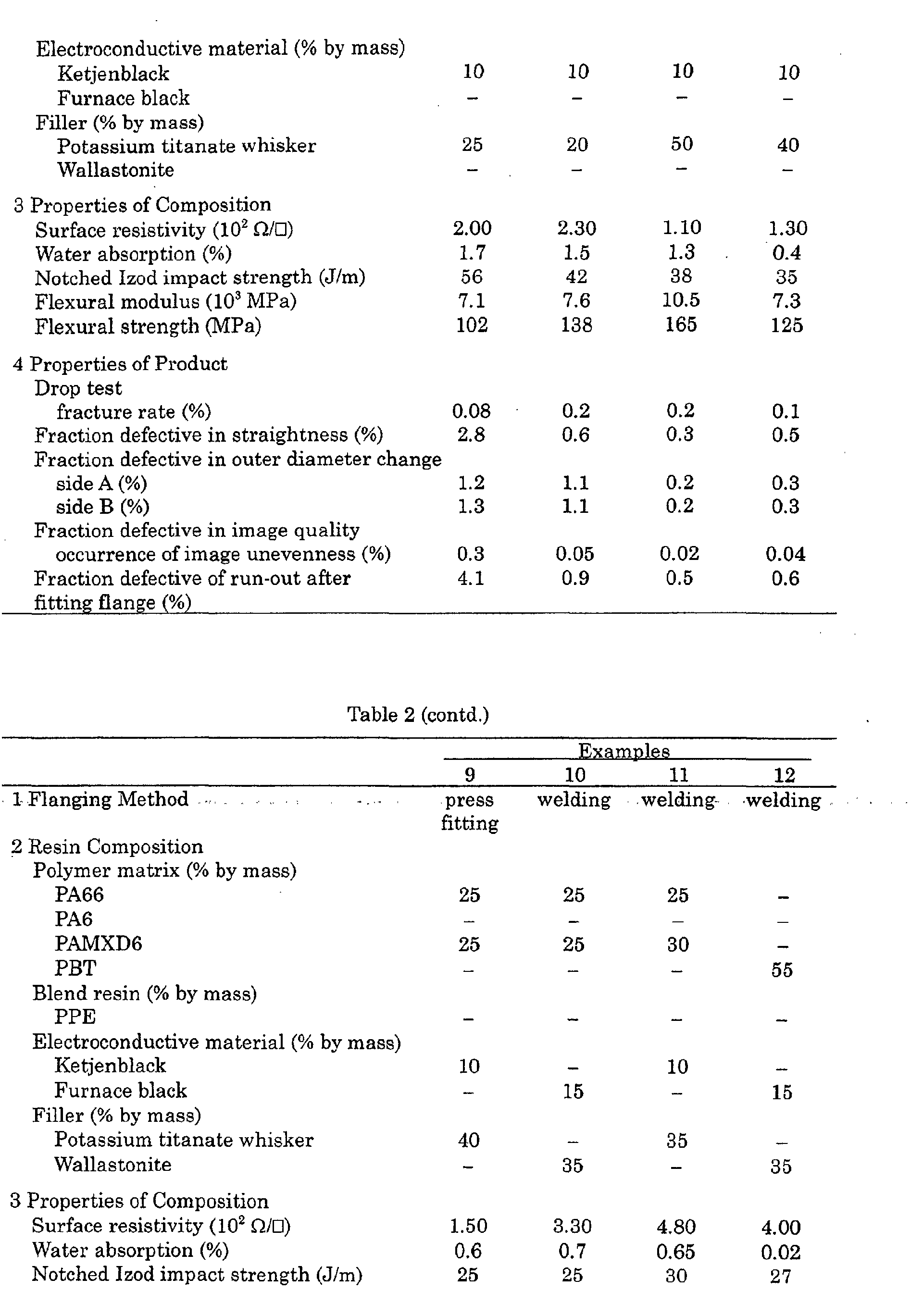

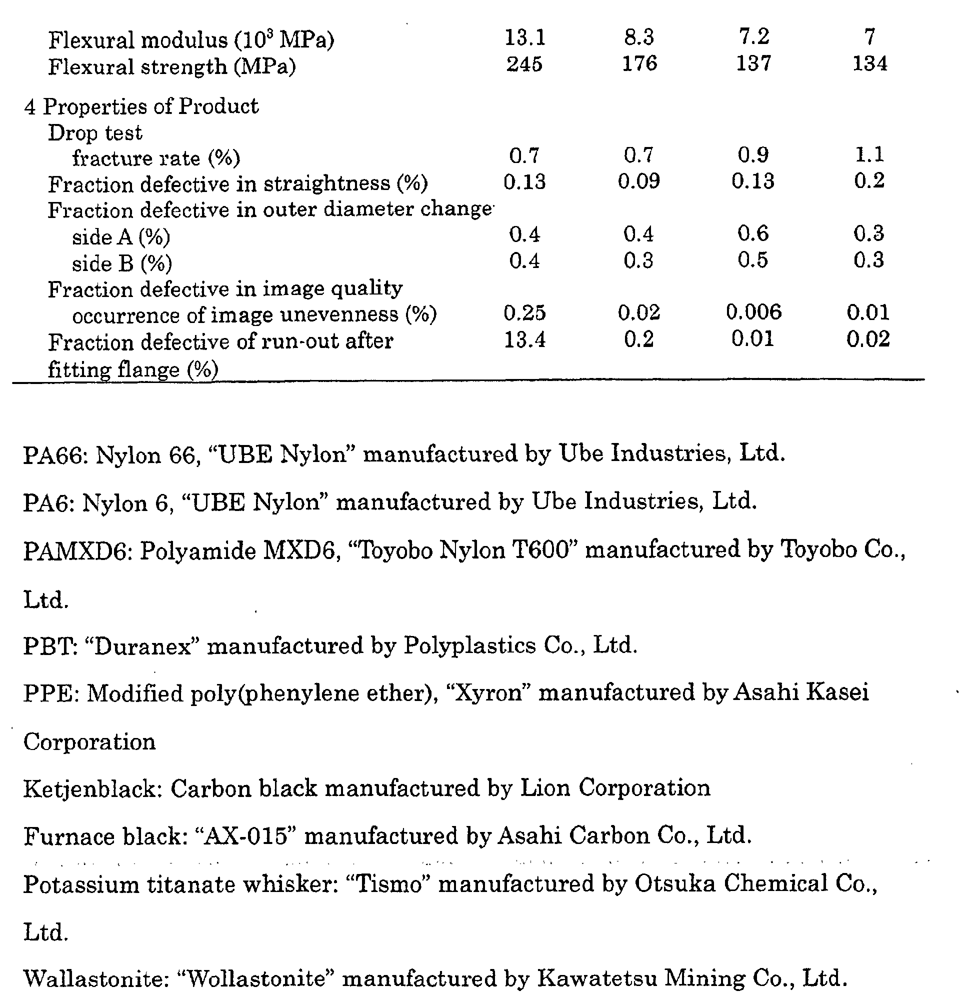

As seen from Table 2, the cylindrical substrates of Examples 1 and 9 produced from resin compositions having nearly the same properties created nearly the same results in the drop test, the straightness test and the outer diameter change test. The photosensitive drum of Example 9 produced by press-inserting the flange to the cylindrical substrate was extremely poor in the rotation accuracy to result in a significantly high rate of uneven image occurrence, as compared with the photosensitive drum of Example 1 having the flange bonded to the cylindrical substrate by ultrasonic welding.

### Industrial Applicability

As described above, the present invention ensures a short-time, efficient production of substrates for sphotosensitive drum having a high rotation accuracy by bonding a flange to a cylindrical substrate by ultrasonic welding.

## Claims

1. A method for producing a cylindrical substrate for photosensitive drum which constitutes a substrate of a photosensitive drum for use in electrophotographic process, the method comprising a step of ultrasonic-welding a resin-made gear flange or flange to each end of a cylindrical substrate that is molded from an electroconductive resin composition prepared by dispersing an electroconductive material and a filler in a polymer matrix by mixing.

2. A method for producing a cylindrical substrate for photosensitive drum which constitutes a substrate of a photosensitive drum for use in electrophotographic process, the method comprising a step of ultrasonic-welding a resin-made gear flange or flange to one end of a cylindrical substrate having a flange integrally formed at the other end, the cylindrical substrate being molded from an electroconductive resin composition prepared by dispersing an electroconductive material and a filler in a polymer matrix by mixing.

3. The method for producing a substrate for photosensitive drum according to Claim 1 or 2, wherein a projection or ridge is formed on an inner peripheral surface at an end portion of the cylindrical substrate so as to butt-contact an outer peripheral surface of a gear portion of the gear flange upon fitting the gear flange into the cylindrical substrate.

4. The method for producing a substrate for photosensitive drum according to Claim 1 or 2, wherein a projection or ridge is formed on an outer peripheral surface of a gear portion of the gear flange so as to butt-contact an inner peripheral surface of the cylindrical substrate upon fitting the gear flange into the cylindrical substrate.

5. The method for producing a substrate for photosensitive drum according to any one of Claims 1 to 4, wherein a projection or ridge is formed on an end surface of the cylindrical substrate so as to butt-contact the flange or a flange portion of the gear flange.

6. The method for producing a substrate for photosensitive drum according to any one of Claims 1 to 4, wherein a projection or ridge is formed on the flange or a flange portion of the gear flange so as to butt-contact the cylindrical substrate.

7. The method for producing a substrate for photosensitive drum according to any one of Claims 1 to 6, wherein the flange or gear flange is molded from the same resin as the polymer matrix for the electroconductive resin composition that forms the cylindrical substrate.

8. A substrate for photosensitive drum produced by the method according to any one of Claims 1 to 7.
